# EUROPÄISCHE PATENTSCHRIFT

(11) **EP 0 551 314 B1**
(45) Veröffentlichungstag und Bekanntmachung des Hinweises auf die Patenterteilung: **11.12.1996**
(21) Anmeldenummer: 91916871.6
(22) Anmeldetag: 24.09.1991
(51) Int. Cl.: H04N 11/00, H04N 7/00

(54) **FERNSEHÜBERTRAGUNGSSYSTEM UND DECODER FÜR EIN FERNSEHÜBERTRAGUNGSSYSTEM**
TELEVISION TRANSMISSION SYSTEM AND DECODER FOR SUCH
SYSTEME DE TRANSMISSION DE TELEVISION ET DECODEUR POUR UN SYSTEME DE TRANSMISSION DE TELEVISION

(30) Priorität: 02.10.1990 DE 4031056; 10.12.1990 DE 4039307
(43) Veröffentlichungstag der Anmeldung: 21.07.1993
(73) Patentinhaber: DEUTSCHE THOMSON-BRANDT GMBH, 78048 Villingen-Schwenningen (DE)
(72) Erfinder: PLANTHOLT, Martin, W-6277 Bad Camberg 2 (DE)
(74) Vertreter: Hartnack, Wolfgang, Dipl.-Ing.
(86) Internationale Anmeldenummer: EP9101818
(87) Internationale Veröffentlichungsnummer: WO9206565

(56) Entgegenhaltungen:
- WO-A-89/08366
- WO-A-91/04637

## Beschreibung

Die Erfindung betrifft ein Fernsehübertragungssystem und einen Decoder für ein Fernsehübertragungssystem mit einer Detektion des Fernsehsignal-Typs.

### Stand der Technik

Für die Einführung eines 16:9-Breitbildformates in bestehende Fernsehstandards (z.B. PAL, NTSC, SECAM), die mit einem 4:3-Bildformat arbeiten, wird das sogenannte 'Letterbox'-Verfahren diskutiert (z.B. "Künftige Fernsehsysteme", F. Müller-Römer, Fernseh- und Kinotechnik, 43.Jahrgang, Heft 6/1989; "Die neuen Wege des alten PAL", A. Ziemer, E. Matzel, Funkschau Nr 18/1989). Auf dem 4:3-Empfänger wird hierbei in kompatibler Weise die Bildinformation der 16:9-Aufnahme dargestellt und zwar mit schwarzen Streifen am oberen und unteren Bildrand und in einer gegenüber Standardfernsehsystemen nicht verbesserten Bildqualität.
Für die formatfüllende Darstellung auf einem 16:9-Empfänger werden in den schwarzen Streifen der kompatiblen 4:3-Übertragung Zusatzinformationen übertragen, die eine verbesserte Bildqualität erlauben. Die Übertragung der Zusatzinformationen erfolgt z.B. im Ultra-Schwarzbereich und wird vom 4:3-Empfänger als nicht sichtbarer Bildinhalt, d.h. schwarz dargestellt. Die Zusatzinformationen in den sogenannten Letterbox-Streifen können z.B. einer verbesserten horizontalen, vertikalen und zeitlichen Auflösung dienen.
Ein 16:9-Empfänger hat dann jedoch nicht nur die mit Zusatzinformationen versehenen Letterbox-Fernsehsignale zu decodieren und formatfüllend darzustellen, sondern muß auch rückwärtskompatibel zu Standard-4:3-Übertragungen sein und diese wiedergeben können. Die angebotenen Signalarten können aber unterschiedlich sein.

Außerdem ist bei der Decodierung von Letterbox-Fernsehsignalen mit Zusatzinformationen normalerweise eine relativ große Bildsignal-Speicherkapazität erforderlich.

### Erfindung

Der Erfindung liegt die Aufgabe zugrunde, eine empfängerseitige Detektion von Standard-Fernsehsignalen und Letterbox-Fernsehsignalen mit Zusatzinformationen anzugeben, wobei aber nur eine relativ kleine Bildspeicherkapazität erforderlich sein soll oder wobei unter Verwendung einer Standard-Bildspeicherkapazität eine Rauschverminderung für decodierte Bildsignale erreicht werden kann.

Diese Aufgabe wird durch die Merkmale des Anspruchs 1 gelöst. Vorteilhafte Weiterbildungen ergeben sich aus den abhängigen Patentansprüchen

Einem 16:9-Empfänger können folgende kompatible Signale zur Decodierung angeboten werden:
i) Standard-4:3-Fernsehsignale,
ii) Standard-4:3-Fernsehsignale mit Letterbox-Format,
iii) 16:9-Fernsehsignale mit Zusatzinformationen.

Aus Gründen der Rekompatibilität sollte ein 16:9-Empfänger ebenfalls Standard-Signale nach i) bzw ii) decodieren und darstellen können. Die Decodierung dieser Standard-Signale kann nach bekannten Verfahren erfolgen.
Der 16:9-Empfänger sollte die angebotenen Signalarten i, ii und iii automatisch detektieren und entsprechend decodieren können. Damit wird vermieden, daß ein zusätzliches Kennungssignal übertragen werden muß oder daß bei Nichtvorhandensein eines solchen Kennungssignales ein Betrachter durch Probieren den Typ des übertragenen Signales (i, ii, iii) herausfinden und die entsprechende Verarbeitung im 16:9-Empfänger auswählen muß.
Speichermittel für Zusatzinformationen können vorteilhaft für eine Detektion der unterschiedlichen Signale i, ii, iii mitgenutzt werden. Die Speichermittel bewirken beim Aufbau des 16:9-Bildes einen gewissen Vorlauf der Zusatzinformationen. Die Bilddarstellung (Display) erfolgt dann generell um beispielsweise ein Teilbild gegenüber dem Eingangssignal verzögert. Der Zeitraum, der der Speicherung der Zeilen der Letterbox-Streifen eines Teilbildes entspricht, ist für die Detektion der Art der Eingangssignale nutzbar. Durch eine entsprechende senderseitige zeitliche Anordnung der Zusatzinformationen in den Letterbox-Streifen bezogen auf den aktiven Bildbereich kann die Kapazität der Speichermittel im 16:9-Empfänger vorteilhaft minimiert werden.

### Zeichnungen

Anhand der Zeichnungen werden Ausführungsbeispiele der Erfindung beschrieben. Die Zeichnungen zeigen in:
- Fig. 1: einen bekannten Decoder;
- Fig. 2: eine erste zeitliche Abfolge der Übertragung von Zusatzinformationen (bekannt);
- Fig. 3: die zeitliche Abfolge von der Speicherung der Zusatzinformationen und von einer Bildwiedergabe;
- Fig. 4: Zeilen-Signale am Eingang des Decoders vor der A/D-Wandlung;
- Fig. 5: eine zweite zeitliche Abfolge der Übertragung von Zusatzinformationen.

### Ausführungsbeispiele

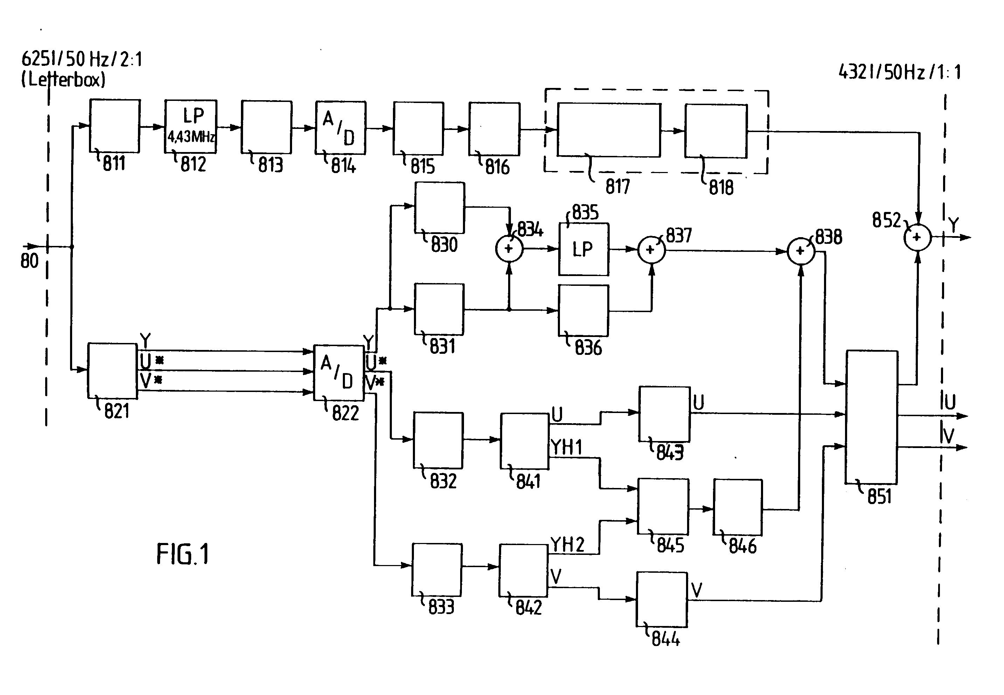

Fig. 1 zeigt einen Decoder für Signale vom Typ iii, die Zusatzinformationen, z.B. Helpersignale in den Letterbox-Streifen, enthalten. Die Zusatzinformationen sind dem Farbträger aufmoduliert und werden in einer Restseitenbandtechnik übertragen. Das Eingangssignal 80 mit 4:3-Bildformat, 625 Zeilen, 50 Hz Bildwechselfrequenz und Halbbild-Darstellung wird sowohl einem Nyquistfilter 811 zur Formung des Restseitenbandes, als auch einem PAL-Demodulator 821 zugeführt. Dieser PAL-Demodulator benötigt keine Zeilenverzögerungs-Schaltung. Das Ausgangssignal des Nyquistfilters 811 gelangt zu einem ersten Demodulator 812, mit dem das auf den Farbträger aufmodulierte Helper-Signal demoduliert wird. In einem anschließenden ersten Tiefpaßfilter 813 wird das Helper-Signal mit einer Grenzfrequenz von 4.43 Mhz gefiltert, bevor es einem A/D-Wandler 814 zugeführt wird.
In einer anschließenden Speicher- und Demultiplexer-Schaltung 815 werden die jeweiligen Anteile des Helper-Signals wieder den ursprünglichen Zeilen zugeordnet und in einer nachfolgenden ersten Interpolationsschaltung 816 horizontal interpoliert bzw. expandiert und den Bildpunkten aus den 432 aktiven Zeilen zugeordnet. Dazu kann ein Filter mit den Koeffizienten 1, 2, 3, 2, 1 verwendet werden.
In einem anschließenden ersten Interlace-Progressive-Interpolator 817 wird aus dem Interlace-Helper-Signal ein Helper-Signal für ein progressives Bildformat gebildet. In einem anschließendem zweiten Demodulator 818 wird mit Hilfe einer zeilen- und vollbildweisen ±1-Wichtung das Helper-Signal in die richtige spektrale Lage innerhalb des fy-ft-Bereichs versetzt und anschließend einem dritten Addierer 852 zugeführt. Für das Helper-Signal ist eine Amplitudenauflösung von sechs Bit ausreichend.
Die Y-, U*-, V*-Komponenten aus dem PAL-Demodulator 821 werden einer A/D-Wandler-Schaltung 822 zugeführt. Das digitale Y-Signal gelangt zu einer ersten Verzögerungsschaltung 830 und zu einer ersten 'Intraframe-Average'-Schaltung 831. Das Ausgangssignal dieser Schaltung wird einer zweiten Verzögerungsschaltung 836 zugeführt und in einem Subtrahierer 834 vom Ausgangssignal der ersten Verzögerungsschaltung 830 abgezogen. Das Ausgangsignal dieses Subtrahierers wird über einen zweiten Tiefpaß 835 einem ersten Addierer 837 zugeführt. Das Ausgangssignal der zweiten Verzögerungschaltung 836 wird ebenfalls dem ersten Addierer 837 zugeführt. Das Ausgangssignal des ersten Addierers 837 besteht aus den Luminanzkomponenten Y1 und Ybp und gelangt zu einem zweiten Addierer 838. Das Signal U* aus dem zweiten A/D-Wandler 822 gelangt zu einer zweiten 'Intraframe-Average'-Schaltung 832 und von dort zu einem ersten Vertikalseparator 841.
Das Signal V∗ gelangt über eine dritte 'Intraframe-Average'-Schaltung 833 zu einem zweiten Vertikalseparator 842. Der erste Vertikal-Separator 841 liefert an seinen Ausgängen die Signale U und Yh1, der zweite Vertikalseparator 842 liefert an seinen Ausgängen die Signale V und Yh2.
Das U-Signal wird einem ersten Vertikal-Interpolator 843 zugeführt und das V-Signal einem zweiten Vertikal-Interpolator 844. In diesen Interpolatoren werden die fehlenden U- und V-Bildpunkte gebildet und zusammen mit den bereits vorhandenen dem zweiten Interlace-Progressive-Interpolator 851 zugeführt. Die Signalanteile Yh1 und Yh2 werden in einem Zeilenmultiplexer 845 kombiniert und als Signal Yh einem dritten Demodulator 846 zugeführt. Dort werden sie durch eine bildpunktweise ±1-Wichtung in die richtige spektrale Lage zurückversetzt. Das Ausgangsignal des dritten Demodulators 846 wird ebenfalls dem zweiten Addierer 838 zugeführt. Das Ausgangssignal des zweiten Addierers 838 gelangt als zusammengesetzte Y-Komponente ebenfalls zum zweiten Interlace-Progressive-Interpolator 851.
Zu dem Y-Ausgangssignal dieses Interlace-Progressive-Interpolators 851 wird in einem dritten Addierer 852 das Helper-Signal addiert. Diese kombinierte Y-Komponente und die U- und V-Komponenten aus dem zweiten Interlace-Progressive-Interpolator 851 werden wieder D/A-gewandelt (nicht dargestellt).
Am Ausgang des Decoders steht ein Fernsehsignal zur Verfügung mit 16:9-Bildformat, 432 aktiven Zeilen, 50 Hz Bildwechselfrequenz, progressiver Darstellung und einer erhöhten Luminanzbandbreite, bezogen auf den 5 MHz-PAL-Übertragungskanal.

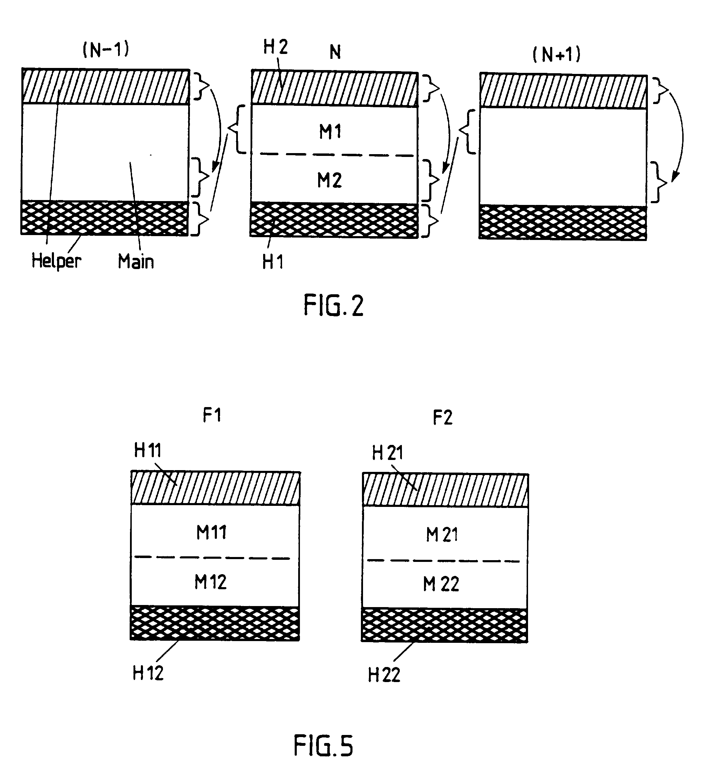

Damit die Zusatzinformationen in der richtigen zeitlichen Abfolge für die Wiedergabe des 16:9-Bildes zur Verfügung stehen bzw. um einen zusätzlichen Speicherkapazitätsbedarf im 16:9-Empfänger zu vermeiden, können sie in der in Fig. 2 gezeigten Weise übertragen werden. Die Zusatzinformationen H1 des zu M1 gehörenden Bildteiles eines Bildes N werden in dem unteren Letterbox-Streifen des Bildes (N-1) übertragen, während die Zusatzinformationenen H2 des Bildteiles M2 im oberen Letterbox-Streifen des Bildes N übertragen werden. In der Reihenfolge der Übertragung werden die Zusatzinformationen in einem Speicher der Speicher- und Demultiplexer-Schaltung 815 abgelegt.
Der Decoder nach Fig. 1 sieht für die Verarbeitung der Luminanz- und Chrominanzsignale eine erste Verzögerungsschaltung 830 vor, die die Laufzeit eines Teilbildes (=20 ms) realisiert. Diese Laufzeit muß sowohl für die Zusatzsignale als auch für die das Fernsehbild begleitendenden Tonsignale berücksichtigt werden. Während die dadurch bedingten Laufzeitunterschiede zwischen Zusatzinformationen und Bildsignalen für den aktiven Bildbereich vorteilhaft bereits im Sender durch eine entsprechende zusätzliche zeitliche Verschiebung der Zusatzsignale vorweggenommen werden können, um dadurch den Speicheraufwand im Empfänger zu verringern, z.B. durch eine Verzögerung der Zusatzsignale um 20 ms, müssen die Tonsignale (aus Kompatibilitätsgründen im 16:9-Empfänger) entsprechend der Speicherdauer bzw. Verarbeitungsdauer der Bildsignale verzögert werden.
Die nicht im einzelnen dargestellten Speichermittel, z.B. in der Speicher- und Demultiplexer-Schaltung 815, können nun vorteilhaft mitbenutzt werden, um mit Hilfe der gespeicherten Signale, insbesondere mit den für eine der Übertragungszeit von zwei Letterbox-Streifen im Teilbild (2∗36 Zeilen) entsprechenden Zeitdauer gespeicherten Bildsignalen, zu detektieren, welche der Signaltypen i, ii oder iii zu decodieren ist.

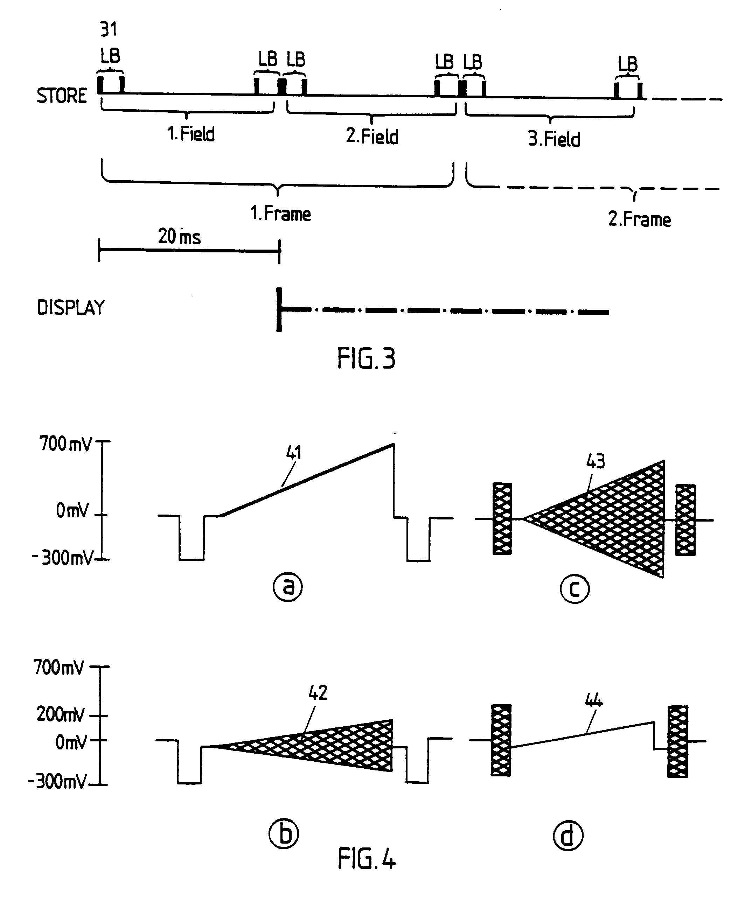

Fig. 3 zeigt den zeitlichen Ablauf der Speicherung der Letterbox-Zeilen 31 (LB) der übertragenen Bildsignale sowie der Bildwiedergabe, die ca. 20 ms verzögert erfolgt. In der Darstellung sind die vertikalen Austastlücken nicht berücksichtigt. Während der Speicherung der 72 Zeilen der Letterbox-Streifen können nun die Amplituden der abgespeicherten Signale ausgewertet werden, um zu erkennen, um welchen Typ i, ii oder iii von Eingangssignalen es sich handelt und welche Art der Decodierung und Darstellung der 16:9-Empfänger zu wählen hat.

Fig. 4a und Fig. 4b zeigen zwei verschiedene Zeilen-Signale aus den ersten bzw. letzten 36 Zeilen eines Teilbildes, also während der Zeilen 31 der Letterbox-Streifen LB in Fig. 3, am Eingang 80 des Decoders nach Fig. 1.
In Fig. 4a ist beispielsweise eine Zeile aus einem Standard-4:3-Fernsehsignal i mit einer linear ansteigenden Amplitude 41 ohne den überlagerten Standard-Farbträger dargestellt.
Fig. 4b zeigt eine Zeile aus den Letterbox-Streifen für ein 16:9-Fernsehsignal iii mit einer ebenfalls linear ansteigende Amplitude 42 in schraffierter Darstellung, wobei das Zusatzsignal im Sender einem Farbträger aufmoduliert wurde.
Nach der Demodulation im ersten Demodulator 812 (die Demodulation kann auch als Modulation bzw. Multiplikation mit einer Trägerfrequenz mit definierter Phasenlage interpretiert werden) ergeben sich die Signale nach Fig. 4c und Fig. 4d. Fig. 4c zeigt jetzt das Fig. 4a entsprechende Zeilensignal 43, welches mit einem Farbträger multipliziert wurde, während Fig. 4d das durch die Demodulation zurückgewonnene Zusatzsignal 44 für die 16:9-Darstellung verdeutlicht. ·
Fig. 4b und Fig. 4d zeigen, daß die Amplitude der Zusatzsignale vor (42) und nach (44) dem ersten Demodulator 812 durch die aus Kompatibilitätsgründen resultierende Voreinstellung am Sender ca. 200 mV (bezogen auf Schwarzwert = 0 mV) nicht übersteigt und den Synchronboden nicht unterschreitet. Demgegenüber weist das standardmäßige 4:3 Signal i in Fig. 4a eine Aussteuerung bis zu 700 mV auf, die nach der (De-)Modulation zu einer Spitze-Spitze-Amplitude von 1,4 V wird (Fig. 4c).

Eine Auswertung der auftretenden Bildpunkt-Wert-Amplituden läßt sich nun für eine Bestimmung des Eingangssignaltyps i, ii oder iii nutzen. Wird beispielsweise im A/D-Wandler 814 eine übliche 8 Bit-Amplitudenquantisierung eingesetzt, so können beispielsweise die zwei höchstwertigen Bits für die einzelnen Bildpunkt-Werte zur Erkennung des Signaltyps ausgewertet werden. Diese Bits zeigen dann an, ob es sich um ein Signal nach Typ i (Fig. 4a) oder nach Typ iii (Fig. 4b) handelt. Für den Fall einer 4:3-Letterbox-Übertragung ohne Zusatzinformationen (Typ ii), ist der Luminanz-Signalwert während der Zeilen der Letterboxstreifen konstant 0 mV und der Chrominanzwert konstant 'ohne Farbe'. Diese Werte entsprechen damit auch einer konstanten, abfragbaren Bit-Kombination.

Diese digitale, amplitudenmäßige Auswertung läßt sich auch auf die Bildpunkt-Werte nur einer oder nur weniger der Zeilen in den Letterboxstreifen anwenden. Die Verwendung eines längeren 'Beobachtungszeitraumes', d.h. von 36 oder 72 Zeilen bzw. über mehrere Bilder bietet jedoch eine wesentlich größere Sicherheit, den Signaltyp i, ii oder iii richtig zu erkennen.

Werden die Zusatzinformationen derart verwürfelt, daß sich in den Letterbox-Streifen eine rauschartige Struktur darstellt, können die empfängerseitigen Speichermittel vorteilhaft als Laufzeit für eine an sich bekannte Korrelationsmessung eingesetzt werden, um den Signaltyp zu detektieren.

Statt der in Fig. 2 dargestellten Weise kann die Übertragung der Zusatzinformationen auch in der in Fig. 5 dargestellten Weise erfolgen. Dazu werden die Zusatzinformationen H11, H12 bzw. H21, H22 in dem jeweils dazugehörigen Teilbild F1 bzw. F2 übertragen. Die Zusatzinformation H11 gehört zu dem Bildteil M11 und die Zusatzinformation H12 zu dem Bildteil M12 des ersten Teilbildes F1. Analoges gilt für das folgende Teilbild F2 und die weiteren Teilbilder (nicht dargestellt). Die benötigte Speicherkapazität im 16:9-Empfänger ist gegenüber der Lösung entsprechend Fig. 2 etwas höher, aber eine solche Anordnung bringt Vorteile für die Verarbeitung im Studio, z.B. bei der Aufzeichnung und in der Schneidetechnik, weil in jedem Halb- bzw. Vollbild die zugehörigen Zusatzinformationen enthalten sind. Im 16:9-Empfänger werden dann entsprechende Zeilen zwischengespeichert, da die Zusatzinformation H12 erst nach dem dazugehörigen Bildteil M12 übertragen wird.
Ist im 16:9-Empfänger eine Speicherkapazität für die Zusatzinformation von mindestens der Größe eines Teilbildes und einer Zeile vorhanden, läßt sich vorteilhaft diese Speicherkapazität ebenfalls zur Rauschreduktion nutzen, soweit dieses der Bildinhalt erlaubt. Eine Rauschreduktion ist wünschenswert, da die Zusatzinformationen mit verringerter Amplitude im Ultra-Schwarzbereich übertragen werden (Fig. 4b) und daher rauschanfälliger als das übrige Bildsignal sind. Die Rauschreduktion wird beispielsweise durch Mittelung der Zusatzinformationen erreicht. Dies kann eine Verbesserung um bis zu 3dB im Signal-Rausch-Verhältnis bewirken. Diese Mittelung ergibt sich beispielsweise durch (H11 + H21)/2 bzw. (H12 + H22)/2 und kann in einer Mittelungsschaltung durchgeführt werden.

Dabei werden Zusatzinformationen aus benachbarten Teilbildern verknüpft. Dies ist aber nur dann zulässig, wenn der Bildinhalt eine entsprechend geringe Bewegung aufweist. Vorteilhaft ist diese Bedingung immer dann gegeben, wenn das Bildmaterial aus einer Filmvorlage (24Hz bzw. 25Hz Vollbilder) stammt, da dann die zeitliche Auflösung gegenüber einer Kameraaufnahme um den Faktor zwei reduziert ist und die zu einem Vollbild gehörenden Teilbilder, z.B. F1 und F2, die gleiche Bewegungsphase wiedergeben. Die Zusatzinformationen sind somit in den beiden Teilbildern ebenfalls identisch (H11 = H21 bzw. H12 = H22).
Nach einem Vorschlag in der ARD/ZDF/ZVEI-Richtlinie "Video-Programm-System", vom 19.10.1984, sind zwei Statusbits in der Datenzeile 16 vorgesehen, bei denen noch ungenutzte Kombinationen für zukünftige Anwendungen freigehalten wurden. Bei der Übertragung von Filmmaterial - im sogenannten Filmmode - kann eine solche Bit-Kombination zur Kennzeichnung dieses Modes verwendet werden. Die vorstehend beschriebene Rauschreduktion läßt sich dann vorteilhaft direkt durch Auswertung dieser Statusbits in einer Decodierungsschaltung für Statusbits steuern.

Andererseits ist auch eine eigenständige empfängerseitige Schaltung in der Art eines Im-Vollbild-Bewegungsdetektors einsetzbar, die bewegungsabhängig entscheidet, ob eine Rauschreduktion angewendet werden kann.
Falls keine Statusbits ausgewertet werden, kann im 16:9-Empfänger durch die Auswertung der Bewegungsdetektor-Ausgangssignale über die Zeitdauer mehrerer Vollbilder detektiert werden, ob der Filmmode vorliegt.
Im Fall der Übertragung von Kamerasignalen kann eine solche empfängerseitige Schaltung vorteilhaft eingesetzt werden, um die Rauschreduktion teilbildweise oder auch nur auf Bildbereiche innerhalb von Teilbildern anzuwenden.

## Patentansprüche

1. Decoder für ein Fernsehübertragungssystem mit Quellsignalen in einem ersten Bildformat - insbesondere von 4:3, z.B. PAL interlace - und einem zweiten Bildformat mit einem vergrößerten Bild-Seiten-Verhältnis - insbesondere von 16:9 - bei dem bei der Übertragung der wesentliche Bildinhalt im zweiten Bildformat innerhalb des ersten Bildformats angeordnet ist und bei dem - bei einer Wiedergabe mit einem Empfänger für das erste Bildformat im wesentlichen unsichtbar - Zusatzinformationen übertragen werden, deren beide Anteile (H1, H2) jeweils zu einer oberen oder unteren Bildbälfte (M1, M2) des wesentlichen Bildinhalts gehöten und die in den beiden Randstreifen außerhalb des wesentlichen Bildinhalts angeordnet und von einem Empfänger für das zweite Bildformat decodierbar sind, um zusammen mit der Information aus dem wesentlichen Bildinhalt (M1, M2) ein formatfüllendes Bild auf diesem Empfänger darzustellen, wobei die übertragenen Signale von einem Empfänger für das erste Bildformat ohne Auswertung der etwa vorhandenen Zusatzinformationen decodierbar sind, **dadurch gekennzeichnet,** daß der Dekoder derart ausgestaltet ist, daß für die Verarbeitung des wesentlichen Bildinhalts (M1, M2) Halbbildspeicher angeordnet sind und bei der Übertragung jeweils der zur unteren Bildhälfte (M2) gehörende Anteil der Zusatzinformationen (H2) im Randstreifen oberhalb der oberen Bildhälfte (M1) des gleichen Bilds (N) und der zur oberen Bildhälfte (M1) gehörende Anteil der Zusatzinformationen (H1) im Randstreifen unterhalb der unteren Bildhälfte (M2) des vorhergehenden Bildes (N-1) angeordnet ist und die Zusatz informationen in dieser Reihenfolge ihrer Übertragung in Speichermitteln (in 815) zwischengespeichert werden, wobei die gespeicherten Zusatzinformationen in einer Demultiplexer-Schaltung (815) dem zugehörigen gespeicherten wesentlichen Bildinhalt zugeordnet werden und die Amplituden von Bildpunktwerten aus den Randstreifen oder von räumlich entsprechend angeordneten Werten der Zusatzinformationen aus den Speichermitteln ausgelesen und in einer Schwellwertschaltung mit einem oder mehreren Schwellwerten verglichen werden und aus diesem Ergebnis die Art der weiteren Decodierung für die übertragenen Signale abgeleitet wird.

2. Decoder nach Anspruch 1, **dadurch gekennzeichnet,** daß die beiden Anteile (H1, H2) der Zusatzinformationen jeweils in dem Halbbild mit dem zugehörigen wesentlichen Bildinhalt übertragen und entsprechend gespeichert werden.

3. Decoder nach Anspruch 1 oder 2, **dadurch gekennzeichnet,** daß zwei oder alle der folgenden Signalarten abgeleitet werden:
- Bildsignal im ersten Bildformat, wenn ein höherer Schwellwert überschritten wird;
- Bildsignal im zweiten Bildformat mit Zusatzinformationen, wenn dieser Schwellwert unterschritten wird;
- Bildsignal im zweiten Bildformat ohne Zusatzinformationen, wenn für die Luminanz Nullwerte und für die Chrominanz Unbunt-Werte ermittelt werden.

4. Decoder nach einem oder mehreren der Ansprüche 1 bis 3, **dadurch gekennzeichnet,** daß die zum Vergleich herangezogenen Bildpunktwerte oder Zusatzinformationswerte jeweils aus einer Zeile oder aus zwei Zeilen eines Halbbilds oder zweier Halbbilder stammen.

5. Decoder nach einem oder mehreren der Ansprüche 1 bis 3, **dadurch gekennzeichnet,** daß die zum Vergleich herangezogenen Bildpunktwerte oder Zusatzinformationswerte jeweils aus allen die Zusatzinformationen enthaltenden Zeilen eines Halbbilds oder zweier Halbbilder stammen.

6. Decoder nach einem oder mehreren der Ansprüche 1 bis 5, **dadurch gekennzeichnet,** daß die zum Vergleich herangezogenen Bildpunktwerte oder Zusatzinformationswerte jeweils aus mehreren Halbbildern stammen.

7. Decoder nach einem oder mehreren der Ansprüche 1 bis 6, **dadurch gekennzeichnet,** daß auch bei Übertragung von Signalen im ersten Bildformat die Tonsignale entsprechend der Verarbeitungszeit für die Bildsignale im zweiten Bildformat verzögert werden.

8. Decoder nach einem oder mehreren der Ansprüche 1 bis 7, **dadurch gekennzeichnet,** daß Bewegung im Bildinhalt innerhalb von Vollbildern in einem Bewegungsdetektor detektiert und/oder eine üibertragene Information über Bewegung im Bildinhalt innerhalb von Vollbildern in einer Decodierungsschaltung für diese Information ausgewertet wird, wobei im Fall von statischem Bildinhalt die Zusatzinformationen (H11 und H21. bzw. H12 und H22) für das entsprechende Vollbild in einer Rauschreduktionsschaltung rauschreduzierend verarbeitet, insbesondere in einer Mittelungsschaltung gemittelt werden.

9. Decoder nach einem oder mehreren der Ansprüche 1 bis 8, **dadurch gekennzeichnet,** daß die Speichermittel als Laufzeitschaltung für eine bekannte Korrelationsmessung eingesetzt werden, um die Art der Decodierung für die übertragenen Quellensignale abzuleiten.

## Claims

1. Decoder for a television transmission system having source signals in a first picture format - in particular, 4:3, e.g. PAL interlace - and a second picture format having an enlarged picture aspect ratio - in particular, of 16:9 - in which the basic picture content in the second picture format is arranged within the first picture format during the transmission and in which there are transmitted auxiliary items of information - that are substantially invisible during reproduction in a receiver for the first format - , whose two components (H1, H2) appertain respectively to an upper or lower half (M1, M2) of the basic picture content and which are arranged in the two edge bands outside the basic picture content and are decodable by a receiver for the second picture format in order to present, together with the information from the basic picture content (M1, M2), a full format picture in this receiver, wherein the transmitted signals are decodable by a receiver for the first picture format without evaluating the possibly present auxiliary items of information, characterised in that, the decoder is equipped in such a way that field stores are arranged for the processing of the basic picture content (M1, M2) and, during the transmission, the component of the auxiliary items of information (H2) appertaining to the lower half of a picture (M2) is arranged in the edge band above the upper half (M1) of the same picture (N) and the component of the auxiliary items of information (H1) appertaining to the upper half of a picture (M1) is arranged in the edge band below the lower half (M2) of the preceding picture (N -1) and the auxiliary items of information are buffer stored in this sequence of their transmission in storage means (in 815), wherein the stored auxiliary items of information are associated in a demultiplexor circuit (815) with the appertaining stored basic picture content and the amplitudes of picture element values from the edge bands or from corresponding spatially arranged values of the auxiliary items of information are read out from the storage means and compared in a threshold value circuit with one or more threshold values and the type of further decoding required for the transmitted signals is deduced from the result of the comparison.

2. Decoder in accordance with Claim 1, characterised in that, the two components (H1, H2) of the auxiliary items of information are respectively transmitted in the field including the appertaining basic picture content and are stored in corresponding manner.

3. Decoder in accordance with Claim 1 or 2, characterised in that, two or all of the following types of signal are deduced:
- picture signal in the first format when a higher threshold value is exceeded;
- picture signal in the second format including auxiliary items of information when this threshold value is not exceeded;
- picture signal in the second format without auxiliary items of information when the value zero is detected for the luminance and the monochrome value is detected for the chrominance.

4. Decoder in accordance with any one or more of the Claims 1 to 3, characterised in that, the picture element values or the values of the auxiliary items of information drawn upon for the comparison respectively originate from a line or from two lines of one field or two fields.

5. Decoder in accordance with any one or more of the Claims 1 to 3, characterised in that, the picture element values or the values of the auxiliary items of information drawn upon for the comparison respectively originate from all of the lines containing auxiliary items of information of one field or two fields.

6. Decoder in accordance with any one or more of the Claims 1 to 5, characterised in that, the picture element values or the values of the auxiliary items of information drawn upon for the comparison respectively originate from a plurality of fields.

7. Decoder in accordance with any one or more of the Claims 1 to 6, characterised in that, even when transmitting signals in the first picture format, the sound signals are delayed in correspondence with the processing time for the picture signals in the second picture format.

8. Decoder in accordance with any one or more of the Claims 1 to 7, characterised in that, movement in the content of the picture within the frames is detected in a movement detector and/or an item of information regarding the movement in the content of the picture, which is transmitted within the frames, is evaluated in a decoding circuit for such information, whereby, in the event of static picture content, the auxiliary items of information (H11 and H21 or H12 and H22) for the corresponding frame are processed in a noise reduction circuit so as to reduce the noise content, in particular, they are averaged in an averaging circuit.

9. Decoder in accordance with any one or more of the Claims 1 to 8, characterised in that, the storage means are employed as a transit time circuit for a known correlation measurement process in order to deduce the type of decoding required for the transmitted source signals.

## Revendications

1. Décodeur pour un système de transmission de télévision par signaux source dans un premier format d'image - de préférence d'un rapport largeur/hauteur 4 : 3, tel que que PAL interlace - et dans un deuxième format d'image - d'un rapport largeur/hauteur agrandi - de préférence d'un rapport de 16 : 9 -, avec configuration du contenu essentiel du deuxième format à l'intérieur du premier format et avec transmission d'informations supplémentaires - invisibles en cas de reproduction à l'aide d'un recepteur pour le premier format - dont les deux éléments (H1, H2) qui font respectivement partie d'une moitié supérieure ou inférieure (M1, M2) du contenu essentiel de l'image et qui sont disposées dans les bandes latérales extérieures au contenu essentiel de l'image, sont décodables par un récepteur pour le deuxième format, afin de constituer, avec les informations provenant du contenu essentiel de l'image (M1, M2), une image remplissant le format sur ce récepteur, sachant que les signaux transmis sont décodables par un récepteur pour le premier format, sans analyse des informations supplémentaires éventuellement transmises,
caractérisé en ce que
le décodeur comporte des mémoires de trame pour le traitement du contenu essentiel de l'image (M1, M2) et que, pendant la transmission, l'élément d'information (H2) appartenant à la moitié inférieure de l'image (M1) est disposé dans la bande latérale au-dessus de la moitié supérieure (M2) de la même image (N), et que l'élément d'information (H1) appartenant à la moitié supérieure de l'image (M1) est disposé dans la bande latérale au-dessous de la moitié inférieure (M2) de l'image précédente (N-1), et que les informations supplémentaires sont mises en mémoire tampon (dans 815) dans l'ordre de leur transmission, sachant que les informations supplémentaires mémorisées sont affectées au contenu essentiel de l'image s'y rapportant à l'aide d'un circuit démultiplexeur, et que les amplitudes de valeurs de pixels ou de valeurs d'informations supplémentaires, de disposition spatiale adéquate, sont lues respectivement dans la bande latérale ou dans les supports de données pour être comparées à une ou à plusieurs valeurs seuil, le résultat de la comparaison servant à déduire le mode de décodage pour les signaux transmis.

2. Décodeur selon la revendication 1, caractérisé en ce que les deux éléments (H1, H2) de l'information supplémentaire sont transmis respectivement dans une trame avec le contenu essentiel de l'image s'y rapportant, puis mémorisés.

3. Décodeur selon la revendication 1 ou 2, caractérisé en ce que deux ou l'ensemble des types de signaux énumérés ci-après sont déduits :
- signal vidéo dans le premier format, en cas de dépassement d'une valeur seuil plus élevée ;
- signal vidéo dans le deuxième format contenant des informations supplémentaires, en cas de détection de valeurs supérieures à cette valeur seuil ;
- signal vidéo dans le deuxième format contenant des informations supplémentaires, en cas de détection de valeurs inférieures à cette valeur seuil ;
- signal vidéo dans le deuxième format sans informations supplémentaires, en cas de détection de valeurs zéro pour la luminance et de valeurs achromatiques pour la chrominance.

4. Décodeur selon l'une ou plusieurs des revendications 1 à 3, caractérisé en ce que les valeurs de pixels ou les valeurs d'informations supplémentaires utilisées pour la comparaison proviennent respectivement d'une ligne ou de deux lignes d'une trame ou de deux trames.

5. Décodeur selon l'une ou plusieurs des revendications 1 à 3, caractérisé en ce que les valeurs de pixels ou les valeurs d'informations supplémentaires utilisées pour la comparaison proviennent respectivement de toutes les lignes d'une trame contenant les informations supplémentaires ou de deux trames.

6. Décodeur selon l'une ou plusieurs des revendications 1 à 5, caractérisé en ce que les valeurs de pixels ou les valeurs d'informations supplémentaires utilisées pour la comparaison proviennent respectivement de plusieurs trames.

7. Décodeur selon l'une ou plusieurs des revendications 1 à 6, caractérisé en ce que les signaux audio sont différés en fonction du délai de traitement des signaux vidéo dans le deuxième format également en cas de transmission de signaux dans le premier format.

8. Décodeur selon l'une ou plusieurs des revendications 1 à 7, caractérisé en ce que les mouvements à l'intérieur des images sont détectés par un détecteur de mouvements et/ou qu'une information relative aux mouvements à l'intérieur des images est décodée par un circuit de décodage prévu à cet effet, sachant que dans le cas d'un contenu statique, les informations supplémentaires (H11 et H21 ou H12 et H22) destinées à l'image correspondante sont traitées par un circuit réducteur de bruit, leur moyenne étant obtenue à l'aide d'un circuit de moyennage.

9. Décodeur selon l'une ou plusieurs des revendications 1 à 8, caractérisé en ce que les supports de données sont utilisés sous la forme de circuits long terme pour une mesure de correlation connue, afin d'en déduire le mode de décodage pour les signaux source transmis.
